# EUROPÄISCHE PATENTSCHRIFT

(11) **EP 2 011 596 B1**
(45) Veröffentlichungstag und Bekanntmachung des Hinweises auf die Patenterteilung: **02.11.2016**
(21) Anmeldenummer: 08008861.0
(22) Anmeldetag: 13.05.2008
(51) Int. Cl.: B23F 19/05, B23Q 7/04, B23F 23/04

(54) **Verfahren und Vorrichtung zum Bearbeiten von um eine Werkstückachse rotierenden Werkstücken**
Method and device for machining workpieces rotating around a workpiece axis
Procédé et dispositif de traitement de pièces à usiner tournant autour de l'axe d'une pièce à usiner

(30) Priorität: 04.07.2007 DE 102007030955
(43) Veröffentlichungstag der Anmeldung: 07.01.2009
(73) Patentinhaber: THE GLEASON WORKS, Rochester, New York 14607-1282 (US)
(72) Erfinder: Mall, Johann, D-82256 Fürstenfeldbruck (DE)
(74) Vertreter: Busch, Thomas

(56) Entgegenhaltungen:
- DE-A1- 3 701 504
- DE-A1- 3 940 759
- JP-A- 61 293 749

## Beschreibung

Die Erfindung bezieht sich auf ein Verfahren zum Bearbeiten von um eine Werkstückachse rotierenden Werkstücken mit einem um eine Werkzeugachse rotierenden Werkzeug, bei dem eine Aufspannvorrichtung in eine erste Position überführt wird, darauf ein zu bearbeitendes Werkstück aufgespannt wird, die Aufspannvorrichtung mit dem darauf aufgespannten Werkstück von der ersten Position in eine davon räumlich getrennte zweite Position überführt wird, in der sie von einer mit der. Aufspannvorrichtung verbundenen Werkstückspindel um die Werkstückachse rotierend antreibbar ist, und die Aufspannvorrichtung nach der Bearbeitung des Werkstücks von der zweiten in die erste Position überführt wird, wobei die Aufspannvorrichtung bei ihrer Überführung von der zweiten in die erste Position von der Werkstückspindel getrennt und bei ihrer Überführung von der ersten in die zweite Position mit der Werkstückspindel verbunden wird, und auf eine Vorrichtung zur Durchführung dieses Verfahrens.

Eine bekannte Vorrichtung (DE 39 40 759 A1), bei der allerdings nicht angegeben ist, ob ihr Werkzeug rotierend ist, die aber im übrigen weitgehend eine solche der eingangs genannten Art ist, können die Aufspannvorrichtungen unterschiedlicher Art sein, beispielsweise Spannplatten, Werkstückpaletten oder Spannfutter. Diese Aufspannvorrichtungen werden ausgehend von ihrer ersten Position längs linearer Führungsschienen auf ein den Führungsschienen entsprechendes Führungssegment aufgeschoben, auf dem sie ihre zweite Position einnehmen. Dieses Führungssegment ist an der Stirnseite der Werkstückspindel festgelegt, deren Drehachse orthogonal zu den linearen Führungsschienen angeordnet ist. Den Führungsschienen, auf denen sich die Aufspannvorrichtungen in ihrer ersten Position befinden, stehen diametral zur Drehachse der Werkzeugspindel weitere lineare Führungsschienen gegenüber. Auf diese weiteren Führungsschienen wird die Aufspannvorrichtung nach der Bearbeitung des Werkstücks von ihrer auf dem Führungssegment eingenommenen zweiten Position aus aufgeschoben, so daß sie dort abweichend von der eingangs genannten Vorrichtung eine dritte Position einnimmt. Wenn schließlich alle Aufspannvorrichtungen aus ihrer ersten Position auf den Führungsschienen in ihre dritte Position auf den weiteren Führungsschienen gelangt sind, kehrt sich die Überführungsrichtung um, indem nunmehr die sich in ihrer dritten Position befindlichen Aufspannvorrichtungen auf das Führungssegment der Werkstückspindel aufgeschoben und von dort aus in die erste Position weitergeschoben werden. Eine Berücksichtigung der relativen Drehlage zwischen dem auf der Werkzeugspindel aufgespannten Werkstück und einem rotierend angetriebenen Werkzeug findet bei keinem dieser Vorgänge statt. JP 61293749 A offenbart ein Verfahren und eine Vorrichtung nach dem Oberbegriff von Anspruch 1 bzw 8.

Bei einer anderen bekannten Werkzeugmaschine (EP 1 402 991 A2) dienen Paletten, auf deren horizontal ausgerichteter Oberseite die Werkstücke festgelegt sind, als Spannvorrichtungen. Diese Paletten werden von einem Palettenwechsler an einen drehangetriebenen Rundtisch mit vertikaler Drehachse übergeben, welcher auf einem Tischschlitten längs linearer Führungen zu einem um eine horizontale Werkzeugachse rotierenden Werkzeug hin vorgeschoben wird. Auch hier sind keine Vorkehrungen getroffen, mit denen die Drehpositionen des Werkzeugs und des Werkstücks zueinander in Beziehung gebracht werden können.

Bei einer weiteren bekannten Werkzeugmaschine (EP 1 591 194 A2) laufen auf einer sich in einer horizontalen Ebene erstreckenden endlosen Umlaufbahn Paletten um, deren jede an ihrer Oberseite eine abziehbare Plattform trägt. Auf diese Plattform werden längs eines Abschnittes der endlosen Umlaufbahn mit den Werkstücken versehene Aufspannvorrichtungen aufgesetzt. Am Ende dieses Abschnittes wird jeweils eine Plattform von der Umlaufbahn abgezweigt und einem rotierenden Werkzeug zugeführt. Nach der Bearbeitung wird die entleerte Plattform an der Abzweigung in die Umlaufbahn zurückgespeist, indem sie wieder auf ihre dort wartende Palette aufgeschoben wird. Auch bei diesen Vorgängen spielt die relative Drehposition zwischen dem Werkstück und dem Werkzeug keine Rolle.

In einem anderen bekannten Verfahren, bei dem die Werkstücke Zahnräder und das Werkzeug eine zum Schleifen ihrer Verzahnung dienende Schleifschnecke ist (DE 198 57 592 A1), ist die Aufspannvorrichtung ein untrennbarer Bestandteil der Werkstückspindel. Dies hat zur Folge, daß die Werkstückspindel zusammen mit ihrem Servoantrieb und einem ihrer Führung längs einer Bearbeitungsachse dienenden Schlitten zwischen der ersten und der zweiten Position hin- und herbewegt werden muß. Dies erfordert bei der zur Durchführung des Verfahrens dienenden Vorrichtung einen hohen baulichen Aufwand. Da in letzterer zur Verkürzung der Bearbeitungszeiten die Bestückung mit Werkstücken in der ersten Position und die Bearbeitung von Werkstücken ausgehend von der zweiten Position in zeitlicher Überlappung ausgeführt wird, ist der bauliche Aufwand weiterhin dadurch erhöht, daß eine zweite Werkstückspindel mit Servoantrieb und Führungsschlitten erforderlich ist.

Der Erfindung liegt die Aufgabe zugrunde, ein Verfahren und eine Vorrichtung der eingangs genannten Art zu schaffen, die bei einem geringen baulichen Aufwand auch eine Einstellung der relativen Drehposition zwischen dem Werkstück und dem Werkzeug ermöglichen.

Erfindungsgemäß wird diese Aufgabe hinsichtlich des Verfahrens dadurch gelöst, daß die Aufspannvorrichtung in der ersten Position mit einer eine der Verbindung zwischen der Aufspannvorrichtung und der Werkstückspindel entsprechende Verbindung aufweisenden, drehend antreibbaren Indexierspindel verbunden wird, mit der ein eine Winkelposition des auf dieser Aufspannvorrichtung aufgespannten Werkstücks darstellendes Signal erzeugbar ist.

Bei dem erfindungsgemäßen Verfahren wird die Verbindung zwischen der Werkstückspindel und der mit dem zu bearbeitenden Werkstück bestückten Aufspannvorrichtung erst durch deren Übergang in ihre zweite Position hergestellt. In diesem verbundenen Zustand kann das aufgespannte Werkstück von der Werkstückspindel um die Werkstückachse rotierend angetrieben werden. Falls für den Bearbeitungseingriff zwischen dem aufgespannten Werkstück und dem Werkzeug eine Bewegung längs einer Bearbeitungsachse erforderlich ist, kann die Werkstückspindel auf einem längs dieser Bearbeitungsachse bewegbaren Schlitten angeordnet sein, wobei die Bearbeitungsachse beispielsweise parallel zur Werkstückachse ausgerichtet sein kann. Die Bewegung der Werkstückspindel längs dieser Bearbeitungsachse kann insbesondere beim Honen, Schleifen, Schaben oder Wälzfräsen von Zahnrädern relativ zu dem um die Werkzeugachse rotierenden Werkzeug erforderlich sein, bei dem es sich in den genannten Fällen um ein Honrad, eine Schleifschnecke, eine Schleifscheibe, ein Schabrad oder einen Wälzfräser handeln kann. Nach der Bearbeitung wird die Aufspannvorrichtung in ihrer zweiten Position von der Werkstückspindel getrennt und für einen Austausch des bearbeiteten Werkstücks gegen ein zu bearbeitendes Werkstück in die erste Position überführt, wobei die Werkstückspindel zurückbleibt und nicht mitgeführt werden muß.

Dabei ist im Rahmen der Erfindung vorgesehen, daß die Aufspannvorrichtung in der ersten Position mit einer eine der Verbindung zwischen der Aufspannvorrichtung und der Werkstückspindel entsprechende Verbindung aufweisenden, drehend antreibbaren Indexierspindel verbunden wird, mit der ein eine Winkelposition des auf dieser Aufspannvorrichtung aufgespannten Werkstücks darstellendes Signal erzeugbar ist. Mit Hilfe dieses Signals kann die relative Drehposition zwischen dem auf dieser Aufspannvorrichtung aufgespannten Werkstück und dem Werkzeug so eingestellt werden, wie es nach der Überführung der Aufspannvorrichtung in die zweite Position für den Bearbeitungseingriff mit dem Werkzeug erforderlich ist. Diese Einstellung der relativen Drehposition ist insbesondere erforderlich, wenn es sich bei dem Werkstück um ein Zahnrad und bei dem Werkzeug um ein Fertigbearbeitungswerkzeug, wie ein innenverzahntes Honrad oder Schabrad oder eine Schleifschnecke oder eine Schleifscheibe, handelt. Durch die Einstellung der richtigen relativen Drehposition muß sichergestellt werden, daß das Werkzeug kollisionsfrei in eine zu bearbeitende Zahnlücke eintauchen kann. Für diesen Indexierungsvorgang wird bekanntlich die Verzahnung des zu bearbeitenden Zahnrades mit einem insbesondere berührungslos arbeitenden Sensor abgetastet und ansprechend auf das Abtastsignal in einer dafür programmierten Steuereinrichtung das die Winkelposition darstellende Signal erzeugt. Beispielsweise könnte hierdurch die mit der Aufspannvorrichtung verbundene Indexierspindel in die richtige relative Drehposition gedreht werden, oder alternativ die Werkstückspindel. Bei der erfindungsgemäßen Ausführungsform entsteht der für diesen Indexiervorgang erforderliche Zeitbedarf insbesondere in der ersten Position, so daß der Bearbeitungsvorgang durch das Werkzeug ausgehend von der zweiten Position ohne den für die Indexierung erforderlichen Zeitbedarf unmittelbar beginnen kann.

Zweckmäßigerweise ist vorgesehen, daß mindestens zwei Aufspannvorrichtungen vorgesehen sind, von denen die eine von der ersten Position in die zweite Position überführt wird, während die andere von der zweiten Position in die erste Position überführt wird. Insbesondere kann dadurch das Verfahren derart ausgeführt werden, daß das Aufspannen eines unbearbeiteten Werkstücks auf der in der ersten Position befindlichen Aufspannvorrichtung in zeitlicher Überlappung mit der Bearbeitung eines auf der in der zweiten Position befindlichen Aufspannvorrichtung aufgespannten Werkstücks erfolgt. Durch diese Maßnahmen wird die Bearbeitungsgeschwindigkeit bei Serienfertigung erheblich erhöht, weil in zeitlicher Überlappung mit der Bearbeitung des auf der mit der Werkstückspindel verbundenen Aufspannvorrichtung aufgespannten Werkstücks die Bestückung der in der ersten Position befindlichen Aufspannvorrichtung mit dem in der Bearbeitungsreihenfolge nächstfolgenden Werkstück ausgeführt wird.

In einer zweckmäßigen Ausführungsform des erfindungsgemäßen Verfahrens ist vorgesehen, daß das Trennen oder Verbinden durch eine Relativbewegung zwischen der Aufspannvorrichtung und der Werkstückspindel oder der Indexspindel längs der betreffenden Spindelachse erfolgt. In diesem Fall erfolgt also das Trennen oder Verbinden durch eine zur Spindelachse parallele Hubbewegung, durch die die Aufspannvorrichtung von der betreffenden Spindel abgezogen bzw. auf diese aufgeschoben wird.

Weiterhin erweist es sich als zweckmäßig, daß das Überführen der Aufspannvorrichtung zwischen der ersten und der zweiten Position längs einer Schwenkbewegung um eine zur Werkstückachse parallele Drehachse erfolgt. Durch diese Schwenkbewegung wird die von der betreffenden Spindel getrennte Aufspannvorrichtung zwischen der ersten und zweiten Position längs eines Kreisbogens bewegt.

In vorrichtungsmäßiger Hinsicht ist die der Erfindung zugrundeliegende Aufgabe gelöst durch eine Vorrichtung zum Bearbeiten von um eine Werkstückachse rotierenden Werkstücken mit einem um eine Werkzeugachse rotierend antreibbaren Werkzeug, einer Aufspannvorrichtung, auf die ein Werkstück in einer ersten Position der Aufspannvorrichtung aufspannbar ist, und einer Überführungsvorrichtung, durch die die Aufspannvorrichtung von der ersten Position in eine davon räumlich getrennte zweite Position überführbar ist, in der sie von einer mit der Aufspannvorrichtung in Verbindung stehenden Werkstückspindel um die Werkstückachse rotierend antreibbar ist, wobei die Verbindung zwischen der Aufspannvorrichtung und der Werkstückspindel einen an der Werkstückspindel permanent festgelegten ersten Verbindungsabschnitt und einen dazu komplementären, an der Aufspannvorrichtung permanent festgelegten zweiten Verbindungsabschnitt aufweist, die durch eine Relativbewegung zwischen dem ersten Verbindungsabschnitt und dem zweiten Verbindungsabschnitt voneinander trennbar und wieder verbindbar sind, und wobei erfindungsgemäß vorgesehen ist, daß an der ersten Position ein dem Verbindungsabschnitt der Werkstückspindel entsprechender Verbindungsabschnitt einer Indexierspindel angeordnet ist.

Zweckmäßige Ausgestaltungen der erfindungsgemäßen Vorrichtung sind in den abhängigen Ansprüchen 9 bis 18 angegeben.

In der folgenden Beschreibung wird die Erfindung anhand einer Ausführungsform der erfindungsgemäßen Vorrichtung unter Bezugnahme auf die Zeichnung näher erläutert. Hierin zeigen:
- Fig. 1: eine schematische Darstellung einer Zahnradhonmaschine in perspektivischer Ansicht,
- Fig. 2: einen Axialschnitt der Verbindung zwischen einer Aufspannvorrichtung und einer Arbeitsspindel in der in Fig. 1 dargestellten Zahnradhonmaschine,
- Fig. 3: eine vergrößerte Ansicht eines Greifers der in Fig. 1 dargestellten Zahnradhonmaschine in seiner Schließstellung, und
- Fig. 4: eine Fig. 3 entsprechende Ansicht des Greifers in seiner Öffnungsstellung.

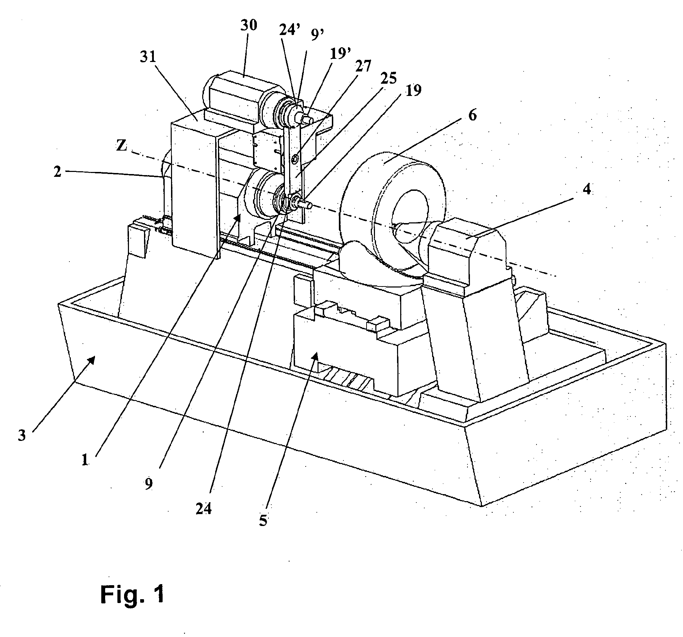

Gemäß Fig. 1 weist die Zahnradhonmaschine eine von einem Servoantrieb rotierend antreibbare Werkstückspindel 1 auf, deren Rotationsachse Z horizontal verläuft. Die Werkstückspindel 1 ist auf einem Schlitten 2 angeordnet, der auf einem Maschinengestell 3 der Zahnradhonmaschine von einem Servoantrieb längs einer zur Rotationsachse Z parallelen Bearbeitungsachse verschiebbar ist. Ferner ist auf dem Maschinengestell 3 mit der Rotationsachse Z fluchtend und parallel zu deren Richtung verstellbar ein Reitstock 4 angeordnet.

Zwischen der Werkstückspindel 1 und dem Reitstock 4 ist auf einer Schlittenanordnung 5 ein Werkzeugkopf 6 angeordnet, der durch die Schlittenanordnung 5 in einer zur Rotationsachse Z orthogonalen Ebene längs beliebiger Bewegungsbahnen bewegbar ist. Der Werkzeugkopf 6 ist ferner auf der Schlittenanordnung um eine orthogonale Achse winkeleinstellbar gelagert und kann mit einem der Winkeleinstellung dienenden Servoantrieb versehen sein. In dem Werkzeugkopf 6 ist das Honrad der Zahnradhonmaschine rotierend antreibbar gelagert, wobei ein hierfür vorgesehener Rotationsantrieb in Fig. 1 nicht sichtbar ist.

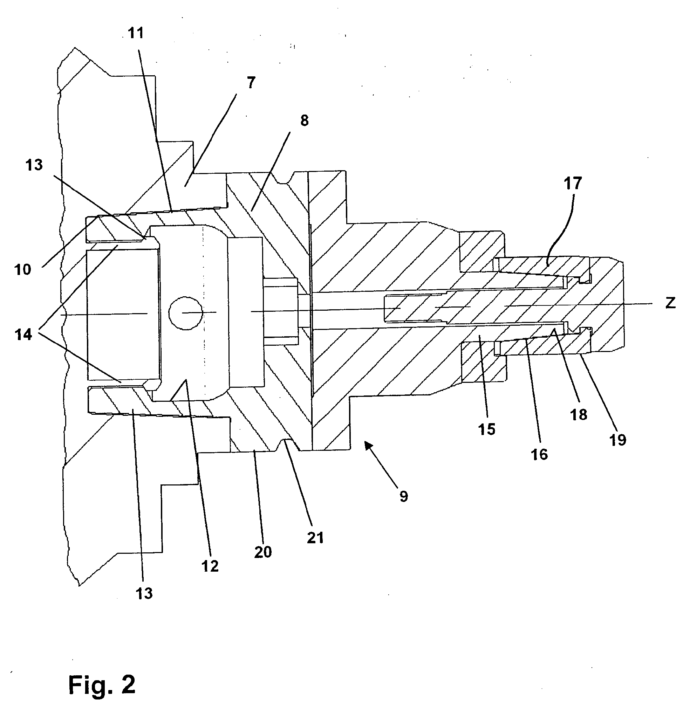

Gemäß Fig. 2 weist die Werkstückspindel 1 an ihrem zu dem Werkzeugkopf 6 gerichteten axialen Ende einen ersten Verbindungsabschnitt 7 auf, mit dem ein dazu komplementärer zweiter Verbindungsabschnitt 8 einer Aufspannvorrichtung 9 in trennbarer Weise verbindbar ist. Im einzelnen weist der erste Verbindungsabschnitt 7 eine zur Rotationsachse Z koaxiale, kegelstumpfmantelförmige Innenfläche 10 auf, die sich in Richtung auf die Aufspannvorrichtung 9 konisch erweitert. Der zweite Verbindungsabschnitt 8 weist eine zu der Innenfläche 10 komplementäre kegelstumpfmantelförmige Außenfläche 11 auf, die mit der Innenfläche 10 in dem in Fig. 2 dargestellten Verbindungszustand einen Paßsitz bildet.

An einer radial einwärts der Außenfläche 11 liegenden Innenseite 12 des zweiten Verbindungsabschnitts 8 sind radial einwärts gerichtete, axiale Vorsprünge 13 ausgebildet, die in Umfangsrichtung gesehen von der Rotationssymmetrie abweichende Bereiche bilden. Diese axialen Vorsprünge 13 stützen sich in dem in Fig. 2 dargestellten verbundenen Zustand in der Umfangsrichtung an dazu komplementären Nutensteinen ab, die an dem Verbindungsabschnitt 7 der Werkstückspindel 1 drehfest festgelegt, aber in Fig. 2 nicht sichtbar sind. Hierdurch ist die Winkelstellung der Aufspannvorrichtung 9 relativ zu der Werkstückspindel 1 festgelegt.

Das dem zweiten Verbindungsabschnitt 8 entgegengesetzte axiale Ende der Aufspannvorrichtung 9 ist mit einem zur Rotationsachse Z koaxialen Spannkonus 15 versehen, auf dessen kegelstumpfmantelförmiger Außenfläche 16 eine Expandierhülse 17 mit einer zu der Außenfläche 16 komplementären kegelstumpfmantelförmigen Innenfläche 18 angeordnet ist. Durch diese Anordnung ist die Expandierhülse 17 durch eine radiale Relativverschiebung zwischen letzterer und dem Spannkonus 15 zwischen einem radial kontrahierten Zustand und einem radial expandierten Zustand verstellbar. Anstelle des Spannkonus 15 könnten andere, dem Fachmann bekannte Mittel vorgesehen sein, durch die der Radius der Expandierhülse vergrößert oder verkleinert werden kann.

Die Expandierhülse 17 weist eine zur Rotationsachse Z koaxiale, zylindermantelförmige Außenfläche 19 auf, die beim Aufspannen eines Werkstücks in eine zu dessen Werkstückachse koaxiale Bohrung eingesetzt wird und im axial kontrahierten Zustand an deren zylindermantelförmigen Innenfläche kraftschlüssig anliegt. Somit stimmen die Rotationsachse Z und die Werkstückachse überein.

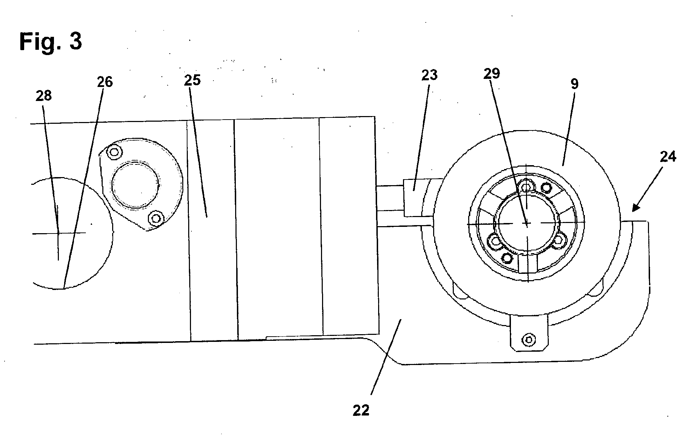

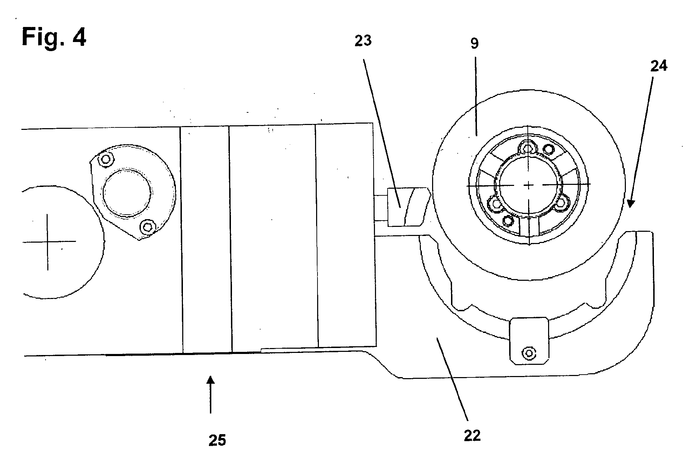

In einem zwischen der Expandierhülse 17 und dem zweiten Verbindungsabschnitt 8 gelegenen zylindrischen Bereich 20 des Außenumfangs der Aufspannvorrichtung 9 ist eine zur Rotationsachse Z koaxiale Ringnut 21 mit sich nach außen hin V-förmig öffnendem Querschnitt ausgebildet. Diese dient zum Angriff dazu komplementärer Greiffinger 22, 23 eines in den Fig. 3 und 4 dargestellten Greifers 24. Wie insbesondere aus Fig. 4 ersichtlich ist, ist der eine Greiffinger 22 an einem freien Ende eines Trägers 25 feststehend angeordnet, wogegen der andere Greiffinger 23 gesteuert zwischen einer in Fig. 4 dargestellten Öffnungsstellung und einer in Fig. 3 dargestellten Schließstellung bewegbar ist. Aus den Fig. 3 und 4 ist weiter erkennbar, daß der Greiffinger 22 in der Ringnut 21 der Aufspannvorrichtung 9 etwa längs ihrer halben Umfangslänge in Angriff bringbar ist, wogegen der bewegbare Greiffinger 23 in der Schließstellung, in der er in Richtung auf die in dem Greiffinger 22 liegende Aufspannvorrichtung 9 vorgeschoben ist, in die verbleibende Umfangshälfte der Ringnut 21 eingreift und dadurch einen festen Sitz der Aufspannvorrichtung 9 in dem Greifer 24 bewirkt.

Die Fig. 3 und 4 zeigen lediglich ein mit dem Greifer 24 versehenes Ende des Trägers 25 sowie einen sich von diesem Ende aus zu einer Achsbohrung 26 erstreckenden Abschnitt dieses Trägers. Aus Fig. 1 ist ersichtlich, daß der Träger 25 zur Achsbohrung 26 symmetrisch ist und an seinem anderen Ende mit einem dem Greifer 24 entsprechenden Greifer 24' versehen ist. Weiter ist aus Fig. 1 ersichtlich, daß der Träger 25 mit seiner Achsbohrung 26 auf einer zur Werkstückachse achsparallelen Betätigungswelle 27 festgelegt ist, wobei der Achsabstand zwischen der Betätigungswelle 27 und der Werkstückachse Z dem Abstand zwischen dem in Fig. 3 ersichtlichen Zentrum 28 der Achsbohrung 26 und dem Zentrum 29 der von dem Greifer 24 ergriffenen Aufspannvorrichtung 9 entspricht.

In diesem Achsabstand ist diametral zu der mit der Werkstückspindel 1 verbundenen Aufspannvorrichtung 9 auf einer maschinengestellfesten Konsole 31 eine zur Werkstückachse Z achsparallele Indexierspindel 30 angeordnet, die einen zu dem ersten Verbindungsabschnitt 7 der Werkstückspindel 1 identischen Verbindungsabschnitt für eine trennbare Verbindung mit dem zweiten Verbindungsabschnitt 8 der Aufspannvorrichtung 9 aufweist.

Diese Zahnradhonmaschine wird folgendermaßen betrieben: Bei der Bearbeitung eines auf die mit der Werkstückspindel 1 verbundene Aufspannvorrichtung 9 aufgespannten Zahnrads ist der die Greifer 24, 24' aufweisende Träger 25 gegenüber seiner in Fig. 1 dargestellten Stellung durch eine entsprechende Drehung der Betätigungswelle 27 um 90° im Uhrzeigersinn in eine Ruhestellung verschwenkt. Ferner ist der Schlitten 2 so weit in Richtung des Werkzeugkopfs 6 verschoben, daß das auf der Aufspannvorrichtung 9 aufgespannte Zahnrad innerhalb des Werkzeugkopfes 6 mit dem Honring in Bearbeitungseingriff steht. Gleichzeitig ist eine zu der Aufspannvorrichtung 9 identische weitere Aufspannvorrichtung 9' mit der Indexierspindel 30 verbunden und wird von einer nicht dargestellten Werkstückwechselvorrichtung, die ein zu bearbeitendes Zahnrad auf die Außenfläche 19' der Expandierhülse dieser Aufspannvorrichtung 9' aufschiebt, bestückt. Nachdem das zu bearbeitende Zahnrad auf der Aufspannvorrichtung 9' aufgespannt ist, wird letztere von der Indexierspindel 30 unter der Steuerung durch eine geeignete Steuervorrichtung in eine für den Bearbeitungseingriff mit dem Honrad geeignete Winkelposition gedreht.

Wenn die Bearbeitung des auf der mit der Werkstückspindel 1 verbundenen Aufspannvorrichtung 9 aufgespannten Zahnrads in dem Bearbeitungskopf 6 beendet ist, fährt der die Werkstückspindel 1 tragende Schlitten 2 in seine in Fig. 1 dargestellte Werkstückwechselstellung zurück. In dieser befindet sich die mit der Werkstückspindel 1 verbundene Aufspannvorrichtung 9 in einer gegenüber der von der mit der Indexierspindel 30 verbundenen Aufspannvorrichtung 9' eingenommenen ersten Position räumlich verschiedenen zweiten Position, in der die Ringnut 21 der Aufspannvorrichtung 9 und die Ringnut 21 der Aufspannvorrichtung 9' in einer zur Werkstückachse Z orthogonalen Ebene übereinanderliegen.

In diesem Zustand wird der Träger 25 durch eine Drehung um die Betätigungswelle 27 entgegen dem Uhrzeigersinn um 90° verschwenkt, wobei seine beiden Greifer 24, 24' in die in Fig. 4 dargestellte Öffnungsstellung gesteuert sind. Dadurch gelangen die Greifer 24, 24' an den Ringnuten 21 der Aufspannvorrichtungen 9 bzw. 9' in Angriff und werden in die in Fig. 3 dargestellte Schließstellung gesteuert.

In diesem Zustand wird der Träger 25 mit den an den Aufspannvorrichtungen 9, 9' angreifenden Greifern 24, 24' parallel zur Rotationsachse Z so weit verschoben, daß die in Fig. 2 dargestellte Verbindung zwischen der Werkzeugspindel 1 und ihrer Aufspannvorrichtung 9 sowie zwischen der Indexierspindel 30 und ihrer Aufspannvorrichtung 9' getrennt wird. Anschließend wird durch eine entsprechende Drehung der Betätigungswelle 27 der Träger 25 um 180° verschwenkt, so daß die Aufspannvorrichtung 9 mit der Indexierspindel 30 und die Aufspannvorrichtung 9' mit der Werkstückspindel 1 axial fluchtet. Durch eine anschließende axiale Verschiebung des Trägers 25 wird sodann die Verbindung zwischen der Werkstückspindel 1 und der Aufspannvorrichtung 9' sowie die Verbindung zwischen der Aufspannvorrichtung 9 und der Indexierspindel 30 in der anhand von Fig. 2 erläuterten Weise hergestellt. Dadurch ist die Aufspannvorrichtung 9' von der ersten Position in die zweite Position und die Aufspannvorrichtung 9 von der zweiten Position in die erste Position überführt worden.

In diesem Zustand befindet sich auf der mit der Werkstückspindel 1 verbundenen Aufspannvorrichtung 9' das vorher von der Werkstückwechselvorrichtung zugeführte, zu bearbeitende Zahnrad, während sich auf der mit der Indexierspindel 31 verbundenen Aufspannvorrichtung 9 das in dem Werkzeugkopf 6 bearbeitete Zahnrad befindet.

In diesem Zustand werden die Greifer 24, 24' in ihre Öffnungsstellung gesteuert und anschließend der Träger 25 um 90° in seine vorstehend erörterte Ruhestellung verschwenkt. Sodann tauscht die Werkstückwechselvorrichtung das bearbeitete Zahnrad auf der mit der Indexierspindel 30 verbundenen Aufspannvorrichtung 9 gegen ein neues, zu bearbeitendes Zahnrad aus, und der vorstehend beschriebene Zyklus läuft in ständiger Wiederholung erneut ab, bis alle Werkstücke einer Serie bearbeitet sind.

Der Antrieb für die vorstehend erörterte Schwenk- und Axialbewegung des die Greifer 24, 24' aufweisenden Trägers 25 ist in der Zeichnung nicht dargestellt und kann durch dem Fachmann geläufige Mittel verwirklicht werden. Dieser Antrieb ist ebenso wie die Antriebe für sämtliche Bewegungsachsen, insbesondere die Rotationsachsen der Spindeln 1, 30 und die Linearbewegungsachse des Schlittens 2, von einer elektronischen Steuereinrichtung gesteuert, so daß der gesamte Betrieb automatisch abläuft.

### Verzeichnis der Bezugszeichen

- 1: Werkstückspindel
- Z: Rotationsachse/Werkstückachse
- 2: Schlitten
- 3: Maschinengestell
- 4: Reitstock
- 5: Schlittenanordnung
- 6: Werkzeugkopf
- 7: erster Verbindungsabschnitt
- 8: zweiter Verbindungsabschnitt
- 9,9': Aufspannvorrichtung
- 10: Innenfläche
- 11: Außenfläche
- 12: Innenseite
- 13: axialer Vorsprung
- 14: axiale Nut
- 15: Spannkonus
- 16: Außenfläche
- 17: Expandierhülse
- 18: Innenfläche
- 19, 19': Außenfläche
- 20: Außenumfangsbereich
- 21: Ringnut
- 22,23: Greiffinger
- 24, 24': Greifer
- 25: Träger
- 26: Achsbohrung
- 27: Betätigungswelle
- 28: Zentrum
- 29: Zentrum
- 30: Indexierspindel
- 31: Konsole

## Patentansprüche

1. Verfahren zum Bearbeiten von um eine Werkstückachse (Z) rotierenden Werkstücken mit einem um eine Werkzeugachse rotierenden Werkzeug, bei dem eine Aufspannvorrichtung (9) in eine erste Position überführt wird, darauf ein zu bearbeitendes Werkstück aufgespannt wird, die Aufspannvorrichtung (9) mit dem darauf aufgespannten Werkstück von der ersten Position in eine davon räumlich getrennte zweite Position überführt wird, in der sie von einer mit der Aufspannvorrichtung (9) verbundenen Werkstückspindel (1) um die Werkstückachse (Z) rotierend antreibbar ist, und die Aufspannvorrichtung (9) nach der Bearbeitung des Werkstücks von der zweiten in die erste Position überführt wird, wobei die Aufspannvorrichtung (9) bei ihrer Überführung von der zweiten in die erste Position von der Werkstückspindel (1) getrennt und bei ihrer Überführung von der ersten in die zweite Position mit der Werkstückspindel (1) verbunden wird, **dadurch gekennzeichnet, daß** die Aufspannvorrichtung (9, 9') in der ersten Position mit einer eine der Verbindung zwischen der Aufspannvorrichtung (9, 9') und der Werkstückspindel (1) entsprechende Verbindung aufweisenden, drehend antreibbaren Indexierspindel (30) verbunden wird, mit der ein eine Winkelposition des auf dieser Aufspannvorrichtung (9, 9') aufgespannten Werkstücks darstellendes Signal erzeugbar ist.

2. Verfahren nach Anspruch 1, **dadurch gekennzeichnet, daß** mindestens zwei Aufspannvorrichtungen (9, 9') vorgesehen sind, von denen die eine (9) von der ersten Position in die zweite Position überführt wird, während die andere (9') von der zweiten Position in die erste Position überführt wird.

3. Verfahren nach Anspruch 2, **dadurch gekennzeichnet, daß** das Aufspannen eines unbearbeiteten Werkstücks auf der in der ersten Position befindlichen Aufspannvorrichtung (9') in zeitlicher Überlappung mit der Bearbeitung eines auf der in der ersten Position befindlichen Aufspannvorrichtung (9) aufgespannten Werkstücks erfolgt.

4. Verfahren nach einem der Ansprüche 1 bis 3, **dadurch gekennzeichnet, daß** das Trennen oder Verbinden durch eine Relativbewegung zwischen der Aufspannvorrichtung (9, 9') und der Werkstückspindel (1) oder der Indexspindel (30) längs der betreffenden Spindelachse erfolgt.

5. Verfahren nach einem der Ansprüche 1 bis 4, **dadurch gekennzeichnet, daß** das Überführen der Aufspannvorrichtung (9, 9') zwischen der ersten und der zweiten Position längs einer Schwenkbewegung um eine zur Werkstückachse (Z) parallele Drehachse erfolgt.

6. Verfahren nach einem der Ansprüche 1 bis 5, **dadurch gekennzeichnet, daß** das zu bearbeitende Werkstück ein Rohling eines Zahnradherstellungsprozesses ist.

7. Verfahren nach einem der Ansprüche 1 bis 6, **dadurch gekennzeichnet, daß** das Werkzeug ein Bearbeitungswerkzeug eines Zahnradherstellungsprozesses ist.

8. Vorrichtung zum Bearbeiten von um eine Werkstückachse (Z) rotierenden Werkstücken mit einem um eine Werkzeugachse rotierend antreibbaren Werkzeug, einer Aufspannvorrichtung (9, 9'), auf die ein Werkstück in einer ersten Position der Aufspannvorrichtung (9, 9') aufspannbar ist, und einer Überführungsvorrichtung (25), durch die die Aufspannvorrichtung (9, 9') von der ersten Position in eine davon räumlich getrennte zweite Position überführbar ist, in der sie von einer mit der Aufspannvorrichtung (9) in Verbindung stehenden Werkstückspindel (1) um die Werkstückachse (Z) rotierend antreibbar ist, wobei die Verbindung zwischen der Aufspannvorrichtung (9, 9') und der Werkstückspindel (1) einen an der Werkstückspindel (1) permanent festgelegten ersten Verbindungsabschnitt (7) und einen dazu komplementären, an der Aufspannvorrichtung (9, 9') permanent festgelegten zweiten Verbindungsabschnitt (8) aufweist, die durch eine Relativbewegung zwischen dem ersten Verbindungsabschnitt (7) und dem zweiten Verbindungsabschnitt (8) voneinander trennbar und wieder verbindbar sind, **dadurch gekennzeichnet, daß** an der ersten Position ein dem Verbindungsabschnitt (7) der Werkstückspindel (1) entsprechender Verbindungsabschnitt einer Indexierspindel (30) angeordnet ist.

9. Vorrichtung nach Anspruch 8, **dadurch gekennzeichnet, daß** die der Trennung und Verbindung dienende Relativbewegung zwischen dem ersten Verbindungsabschnitt (7) und dem zweiten Verbindungsabschnitt (8) eine zur Werkstückachse (Z) parallele Linearbewegung ist.

10. Vorrichtung nach Anspruch 8 oder 9, **dadurch gekennzeichnet, daß** die Überführungsvorrichtung (25) einen an der Aufspanneinrichtung (9, 9') in und außer Angriff bringbaren Greifer (24, 24') aufweist, durch den die Aufspannvorrichtung (9, 9') zwischen ihrer ersten und ihrer zweiten Position überführbar ist.

11. Vorrichtung nach Anspruch 10, **dadurch gekennzeichnet, daß** der Greifer (24, 24') zwei zu je einem Umfangsabschnitt der Aufspannvorrichtung (9, 9') komplementäre, zwischen einer Öffnungsstellung und einer Schließstellung relativ zueinander bewegbare Greiffinger (22, 23) aufweist, in deren Schließstellung der Greifer (24, 24') an der Aufspannvorrichtung (9, 9') in Angriff und in deren Öffnungsstellung der Greifer (24, 24') außer Angriff gebracht ist.

12. Vorrichtung nach einem der Ansprüche 10 oder 11, **dadurch gekennzeichnet, daß** mindestens zwei Aufspannvorrichtungen (9, 9') und mindestens zwei Greifer (24, 24') vorgesehen sind, deren einer an der in ihrer ersten Position befindlichen einen Aufspannvorrichtung und deren anderer an der in ihrer zweiten Position befindlichen anderen Aufspannvorrichtung in Angriff bringbar ist.

13. Vorrichtung nach Anspruch 12, **dadurch gekennzeichnet, daß** die beiden Greifer (24, 24') an einem um eine zur Werkstückachse (Z) parallele Achse (27) drehbaren Teil (25) angeordnet sind, durch dessen Drehung die an ihrer ersten Position ergriffene eine Aufspannvorrichtung (9) in ihre zweite Position und die an ihrer zweiten Position ergriffene andere Aufspannvorrichtung (9') in ihre erste Position überführbar ist.

14. Vorrichtung nach einem der Ansprüche 8 bis 13, **gekennzeichnet durch** eine Werkstückwechselvorrichtung, **durch** die die Werkstücke auf die Aufspannvorrichtung (9, 9') aufbringbar und von der Aufspannvorrichtung (9, 9') abnehmbar sind.

15. Vorrichtung nach einem der Ansprüche 8 bis 14, **dadurch gekennzeichnet, daß** die Aufspannvorrichtung (9, 9') eine Expandierhülse (17) aufweist, die zwischen einem radial kontrahierten Zustand, in dem die Expandierhülse (17) in eine zu der Werkstückachse (Z) koaxiale Bohrung des Werkstücks einführbar ist, und einem radial expandierten Zustand, in dem das Werkstück auf der Expandierhülse (17) festgespannt ist, verstellbar ist.

16. Vorrichtung nach einem der Ansprüche 8 bis 15, **dadurch gekennzeichnet, daß** die Werkzeugspindel (1) sowie die Indexierspindel (30) jeweils einen von der Rotationssymmetrie abweichenden Bereich (14) und jede Aufspannvorrichtung (9, 9') einen dazu komplementären Bereich (13) aufweist, durch deren gegenseitigen Eingriff die Winkelstellung der Aufspannvorrichtung (9, 9') relativ zu der mit ihr verbundenen Spindel (1, 30) festgelegt ist.

17. Vorrichtung nach einem der Ansprüche 8 bis 16, **dadurch gekennzeichnet, daß** die Werkstückspindel (1) auf einem längs einer Bearbeitungsachse bewegbaren Schlitten (2) angeordnet ist.

18. Vorrichtung nach Anspruch 17, **dadurch gekennzeichnet, daß** die Bearbeitungsachse parallel zur Werkstückachse (Z) ist.

## Claims

1. A method for machining workpieces that rotate around a workpiece axis (Z) with a tool that rotates around a tool axis, wherein a clamping device (9) is transferred into a first position, a workpiece to be machine is clamped on said clamping device, the clamping device (9) with the workpiece clamped thereon is transferred from the first position into a spatially separate second position in which it can be rotationally driven around the workpiece axis (Z) by a workpiece spindle (1) connected to the clamping device (9), and the clamping device (9) is transferred from the second position into the first position after the workpiece has been machined, the clamping device (9) being separated from the workpiece spindle when it is transferred from the second into the first position, and being connected to the workpiece spindle (1) when it is transferred from the first into the second position, **characterised in that** in the first position the clamping device (9, 9') is connected to a rotationally driven indexing spindle (30) which has a connection corresponding to the connection between the clamping device (9, 9') and the workpiece spindle (1) and which can generate a signal representing an angular position of the workpiece clamped on this clamping device (9, 9').

2. The method according to Claim 1, **characterised in that** at least two clamping devices (9, 9') are provided of which one (9) is transferred from the first position into the second position, whereas the other (9') is transferred from the second position into the first position.

3. The method according to Claim 2, **characterised in that** the clamping of a blank workpiece on the clamping device (9') in the first position takes place in a time overlap with the machining of a workpiece clamped on the clamping device (9) in the first position.

4. The method according to any of Claims 1 to 3, **characterised in that** the separation or connection takes place by means of a relative movement between the clamping device (9, 9') and the workpiece spindle (10) or the index spindle (30) along the respective spindle axis.

5. The method according to any of Claims 1 to 4, **characterised in that** the clamping device (9, 9') is transferred between the first and the second position along a pivot movement around an axis of rotation parallel to the workpiece axis (Z).

6. The method according to any of Claims 1 to 5, **characterised in that** the workpiece to be machined is a blank of a gear wheel production process.

7. The method according to any of Claims 1 to 6, **characterised in that** the tool is a machining tool of a gearwheel production process.

8. A device for machining workpieces that rotate around a workpiece axis (Z) with a tool that can be rotationally driven around a tool axis, a clamping device (9, 9') on which a workpiece can be clamped in a first position of the clamping device (9, 9'), and a transfer device (25) which can transfer the clamping device (9, 9') from the first position into a spatially separated second position in which it can be rotationally driven around the workpiece axis (Z) by a workpiece spindle (1) that is connected to the clamping device (9), the connection between the clamping device (9, 9') and the workpiece spindle (1) having a first connecting segment (7) that is permanently fixed to the workpiece spindle (1) and a complementary second connecting segment (8) that is permanently fixed to the clamping device (9, 9') which can be separated and reconnected by a relative movement between the first connecting segment (7) and the second connecting segment (8), **characterised in that** a connecting segment of an indexing spindle (30) corresponding to the connecting segment (7) of the tool spindle (1) is located in the first position.

9. The device according to Claim 8, **characterised in that** the relative movement serving to separate and connect the first connecting segment (7) and the second connecting segment (8) is a linear movement parallel to the workpiece axis (Z).

10. The device according to Claim 8 or 9, **characterised in that** the transfer device (25) has a gripper (24, 24') that can be engaged and disengaged at the clamping device (9, 9') and that transfers the clamping device (9, 9') between its first and its second position.

11. The device according to Claim 10, **characterised in that** the gripper (24, 24') has two gripping fingers (22, 23) that complement a respective circumferential segment of the clamping device (9, 9') and can be moved relative to one another between an open position and a closed position, the gripper (24, 24') being engaged on the clamping device (9, 9') in its closed position and the gripper (24, 24') being disengaged in its open position.

12. The device according to either of Claims 10 or 11, **characterised in that** at least two clamping devices (9, 9') and at least two grippers (24, 24') are provided, of which one can engage on the one clamping device in its first position, and the other can engage on the other clamping device in its second position.

13. The device according to Claim 12, **characterised in that** the two grippers (24, 24') are arranged on a part (25) that can rotate around an axis (27) that is parallel to the workpiece axis (Z), the rotation of said part being able to transfer the one clamping device (9) engaged in its first position into its second position, and the other clamping device (9') engaged in its second position into its first position.

14. The device according to any of Claims 8 to 13, **characterised by** a workpiece changing device by means of which the workpieces can be placed on the clamping device (9, 9') and can be removed from the clamping device (9, 9').

15. The device according to any of Claims 8 to 14, **characterised in that** the clamping device (9, 9') has an expansion sleeve (17) that can be adjusted between a radially contracted state in which the expansion sleeve (17) can be inserted into a borehole of the workpiece coaxial to the workpiece axis (Z), and a radially expanded state in which the workpiece is securely clamped onto the expansion sleeve (17).

16. The device according to any of Claims 8 to 15, **characterised in that** the tool spindle (1) and the indexing spindle (30) each have an area (14) that deviates from the rotation symmetry and each clamping device (9, 9') has an area (13) complementary to the latter, their reciprocal engagement determining the angular position of the clamping device (9, 9') relative to the spindle (1, 30) connected to the latter.

17. The device according to any of Claims 8 to 16, **characterised in that** the tool spindle (1) is arranged on a carriage (2) that can move along a machining axis.

18. The device according to Claim 17, **characterised in that** the machining axis is parallel to the workpiece axis (Z).

## Revendications

1. Procédé d'usinage de pièces à usiner tournant sur un axe de pièce à usiner (Z) au moyen d'un outil tournant sur un axe d'outil, dans lequel un dispositif de serrage (9) est transféré à une première position, provoquant le serrage d'une pièce à usiner, le dispositif de serrage (9) conjointement à la pièce à usiner qu'il serre est transféré de la première position à une deuxième position spatialement séparée de cette dernière et au niveau de laquelle il peut être entraîné en rotation sur l'axe de la pièce à usiner (Z) par une broche de pièce à usiner (1) reliée au dispositif de serrage (9) et, une fois la pièce usinée, le dispositif de serrage (9) est transféré de la deuxième à la première position, en sachant que, lors du transfert de la deuxième à la première position, le dispositif de serrage (9) est séparé de la broche de pièce à usiner (1) et, lors du transfert de la première à la deuxième position, ce dernier est raccordé à la broche de pièce à usiner (1), **caractérisé en ce que**, à la première position, le dispositif de serrage (9, 9') est raccordé à une broche d'indexage (30) apte à être entraînée en rotation et présentant un raccord correspondant au raccord entre le dispositif de serrage (9, 9') et la broche de pièce à usiner (1), ladite broche d'indexage permettant de produire un signal représentatif d'une position angulaire de la pièce à usiner serrée sur le dispositif de serrage (9, 9').

2. Procédé selon la revendication 1, **caractérisé en ce qu'**il est prévu au moins deux dispositifs de serrage (9, 9') dont l'un (9) est transféré de la première position à la deuxième position tandis que l'autre (9') est transféré de la deuxième position à la première position.

3. Procédé selon la revendication 2, **caractérisé en ce que** le serrage d'une pièce à usiner non encore usinée sur le dispositif de serrage (9') situé à la première position s'effectue de manière partiellement simultanée à l'usinage d'une pièce à usiner serrée sur le dispositif de serrage (9) situé à la première position.

4. Procédé selon l'une quelconque des revendications 1 à 3, **caractérisé en ce que** la séparation ou le raccordement s'effectue par déplacement relatif entre le dispositif de serrage (9, 9') et la broche de pièce à usiner (1) ou la broche d'indexage (30) le long de l'axe de broche concerné.

5. Procédé selon l'une quelconque des revendications 1 à 4, **caractérisé en ce que** le transfert du dispositif de serrage (9, 9') entre les première et deuxième positions s'effectue le long d'un mouvement de pivotement sur un axe de rotation parallèle à l'axe de la pièce à usiner (Z).

6. Procédé selon l'une quelconque des revendications 1 à 5, **caractérisé en ce que** la pièce à usiner est une pièce brute destinée à un processus de production de roue dentée.

7. Procédé selon l'une quelconque des revendications 1 à 6, **caractérisé en ce que** l'outil est un outil d'usinage employé dans un processus de production de roue dentée.

8. Dispositif d'usinage de pièces à usiner tournant sur un axe de pièce à usiner (Z) comportant un outil susceptible d'être entraîné en rotation sur un axe d'outil, un dispositif de serrage (9, 9') sur lequel une pièce à usiner peut être serrée à une première position du dispositif de serrage (9, 9'), et un dispositif de transfert (25) transférant le dispositif de serrage (9, 9') de la première position à une deuxième position spatialement séparée de cette dernière et au niveau de laquelle il peut être entraîné en rotation sur l'axe de la pièce à usiner (Z) par une broche de pièce à usiner (1) raccordée au dispositif de serrage (9), le raccord entre le dispositif de serrage (9, 9') et la broche de pièce à usiner (1) présentant une première section de liaison (7) fixée de manière permanente à la broche de pièce à usiner (1) et une deuxième section de liaison (8), complémentaire de la première section de liaison, fixée de manière permanente au dispositif de serrage (9, 9'), ces sections pouvant être séparées puis de nouveau raccordées sous l'effet d'un déplacement relatif entre la première section de liaison (7) et la deuxième section de liaison (8), **caractérisé en ce qu'**il est prévu, au niveau de la première position, une section de liaison d'une broche d'indexage (30) correspondant à la section de liaison (7) de la broche de pièce à usiner (1).

9. Dispositif selon la revendication 8, **caractérisé en ce que** le déplacement relatif entre la première section de liaison (7) et la deuxième section de liaison (8) qui permet les opérations de séparation et de raccordement consiste en un déplacement linéaire parallèle à l'axe de la pièce à usiner (Z).

10. Dispositif selon la revendication 8 ou 9, **caractérisé en ce que** le dispositif de transfert (25) présente un organe préhenseur (24, 24') susceptible d'être mis en prise et hors de prise avec le dispositif de serrage (9, 9') et permettant de transférer le dispositif de serrage (9, 9') entre les première et deuxième positions.

11. Dispositif selon la revendication 10, **caractérisé en ce que** l'organe préhenseur (24, 24') présente deux doigts de préhension (22, 23) déplaçables l'un par rapport à l'autre entre une position ouverte et une position fermée, chacun complémentaire d'une section circonférentielle du dispositif de serrage (9, 9'), en sachant que, dans la position fermée, l'organe préhenseur (24, 24') est mis en prise au niveau du dispositif de serrage (9, 9') et dans la position ouverte, l'organe préhenseur (24, 24') est mis hors de prise.

12. Dispositif selon l'une quelconque des revendications 10 ou 11, **caractérisé en ce qu'**il est prévu au moins deux dispositifs de serrage (9, 9') et au moins deux organes préhenseurs (24, 24'), dont l'un peut être mis en prise au niveau d'un dispositif de serrage alors en première position et l'autre peut être mis en prise au niveau de l'autre dispositif de serrage alors en deuxième position.

13. Dispositif selon la revendication 12, **caractérisé en ce que** les deux organes préhenseurs (24, 24') sont disposés au niveau d'une partie (25) rotative sur un axe (27) parallèle à l'axe de la pièce à usiner (Z), la rotation de cette partie permettant de transférer à sa deuxième position le dispositif de serrage (9) saisi au niveau de sa première position, et de transférer à sa première position l'autre dispositif de serrage (9') saisi au niveau de sa deuxième position.

14. Dispositif selon l'une quelconque des revendications 8 à 13, **caractérisé par** un dispositif de changement de pièce à usiner permettant d'apporter les pièces à usiner sur le dispositif de serrage (9, 9') et de les retirer du dispositif de serrage (9, 9').

15. Dispositif selon l'une quelconque des revendications 8 à 14, **caractérisé en ce que** le dispositif de serrage (9, 9') présente un manchon expansible (17) réglable entre un état radialement contracté dans lequel le manchon expansible (17) peut être introduit dans un alésage de la pièce à usiner qui est coaxial avec l'axe de la pièce à usiner (Z), et un état radialement expansé dans lequel la pièce à usiner est solidement bloquée sur le manchon expansible (17).

16. Dispositif selon l'une quelconque des revendications 8 à 15, **caractérisé en ce que** la broche d'outil (1) ainsi que la broche d'indexage (30) présentent chacune une zone (14) s'écartant de la symétrie de rotation et chaque dispositif de serrage (9, 9') présente une zone (13) qui en est complémentaire, lesquelles permettent, en prise mutuelle, de régler l'angle du dispositif de serrage (9, 9') par rapport à la broche (1, 30) qui y est raccordée.

17. Dispositif selon l'une quelconque des revendications 8 à 16, **caractérisé en ce que** la broche de pièce à usiner (1) est située sur un chariot (2) déplaçable le long d'un axe d'usinage.

18. Dispositif selon la revendication 17, **caractérisé en ce que** l'axe d'usinage est parallèle à l'axe de la pièce à usiner (Z).
